# EUROPEAN PATENT SPECIFICATION

(11) **EP 3 839 338 B1**
(45) Date of publication and mention of the grant of the patent: **06.12.2023**
(21) Application number: 20208689.8
(22) Date of filing: 19.11.2020
(51) Int. Cl.: F21V 21/04, F21S 8/02, H02G 3/12

(54) **SUPPORT FOR LIGHTING DEVICES TO BE RECESSED IN WALLS OR CEILINGS MADE OF PLASTERBOARD**
TRAGKONSTRUKTION FÜR BELEUCHTUNGSEINRICHTUNGEN ZUM EINBAU IN EINE GIPSPLATTE
SUPPORT POUR DISPOSITIFS D' ÉCLAIRAGE À ENCASTRER DANS UN MUR OU PLAFOND EN PLAQUE DE PLÂTRE

(30) Priority: 16.12.2019 IT 201900024057
(43) Date of publication of application: 23.06.2021
(73) Proprietor: Marconato, Daniele, 31050 Vedelago (TV) (IT)
(72) Inventor: Marconato, Daniele, 31033 Castelfranco Veneto (TV) (IT); Romano, Manuel, 31050 Vedelago (TV) (IT)
(74) Representative: Modiano, Micaela Nadia

(56) References cited:
- EP-A2- 0 957 309
- BE-A3- 1 019 282
- US-A1- 2005 183 344
- US-B1- 6 474 846

## Description

The present invention relates to a support for lighting devices to be recessed in walls or ceilings made of plasterboard.

Nowadays it is known to use lighting devices, such as spotlights, which are mounted recessed at an opening provided in a wall or in a ceiling made of plasterboard, so that only the end part of the lightbulb and of the body of the spotlight is visible externally to the wall or ceiling.

To do this, usually the body of the spotlight has, diametrically if it is round, two springs which are initially folded back, for the step of inserting the body of the spotlight into the opening provided in the wall or in the ceiling made of plasterboard; once the body of the spotlight is inserted, the springs open up and lock in position on the plasterboard.

This solution has drawbacks: since plasterboard is brittle, if the body of the spotlight needs to be removed for maintenance, such as replacing the lightbulb or the transformer, then forcing the springs to close during the extraction of the body of the spotlight from the opening will cause a continuous degradation of the edges of the opening with the consequent possibility that aesthetically a blemish will appear in the shape of the opening which will not be covered by the spotlight.

As a partial solution to such drawback, it is known to provide an insert made of plaster, a stronger material than plasterboard, which usually has a round or rectangular perimetric edge, in the center of which is a seat for the body of a spotlight.

The insert has a thickness equal to that of the wall or ceiling made of plasterboard.

Then, in the wall or in the ceiling, an opening that has the same perimetric dimensions as the insert is formed.

In order to allow the stable positioning of the support in the wall or in the ceiling, the insert has two metallic fins that protrude diametrically with respect to each other and which enable the interconnection, using screws, on the wall or on the ceiling.

Then webbing is placed on the perimetric edges of the opening and of the support, and then a final smoothing is carried out to even out the surfaces.

This solution also has drawbacks: the different strengths of plasterboard and plaster, at the perimetric edges of the opening and of the support, entail the possibility that, notwithstanding the application of webbing, cracks may form that, in order to be removed, would require a long and burdensome restoration operation.

A support according to the state of the art is disclosed in the document BE 1 019 282 A3.

The aim of the present application is to solve the above-mentioned technical problems, eliminating the drawbacks in the cited known art, by providing a support for lighting devices that makes it possible to install a lighting device to be recessed in walls or ceilings made of plasterboard while at the same time making it possible to prevent the formation of cracks at the opening that can be made in the wall or on the ceiling.

Within this aim, an object of the invention is to provide a support for lighting devices that makes it possible to install a lighting device to be recessed in walls or ceilings made of plasterboard while obtaining an optimal finish that is stable over time and free from maintenance.

Another object is to provide a support for lighting devices wherein, in the event maintenance still needs to be carried out on the lighting device, the latter is easily removable while at the same time preserving the finish with respect to the wall or ceiling in which it is recessed.

Another object is to provide a support for lighting devices that is structurally simple and low-cost and which can be made with the usual conventional plants.

This aim and these and other objects which will become more apparent hereinafter are achieved by a support for lighting devices to be recessed in walls or ceilings made of plasterboard, characterized in that it is constituted by a plasterboard panel provided with at least one first central opening to which is coupled, by clamping, a plaster insert which is provided with a seat for said lighting device, said support being associable perimetrically to a complementarily-shaped second opening provided in said wall or ceiling, said plasterboard panel having a greater perimetric space occupation than said plaster insert and a thickness that is less than that of said wall or ceiling with which it can be associated by way of battens which can be coupled perimetrically to said second opening.

Further characteristics and advantages of the invention will become more apparent from the detailed description of a particular but not exclusive embodiment thereof, illustrated by way of non-limiting example in the accompanying drawings, wherein:

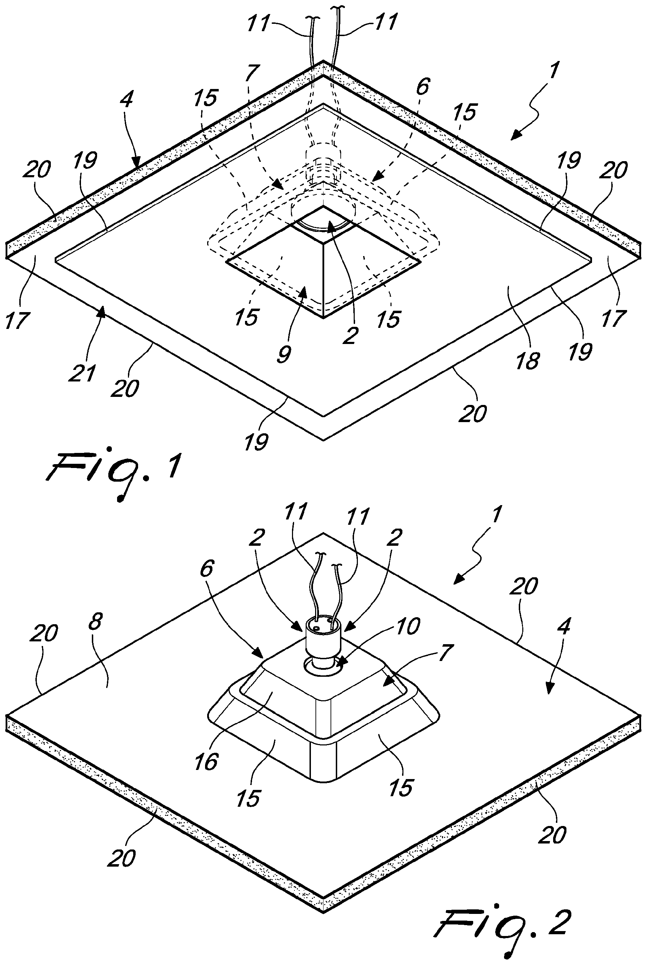

Figure 1 is a perspective view from below of the support with a spotlight applied;
Figure 2 is a perspective view from above of the support;

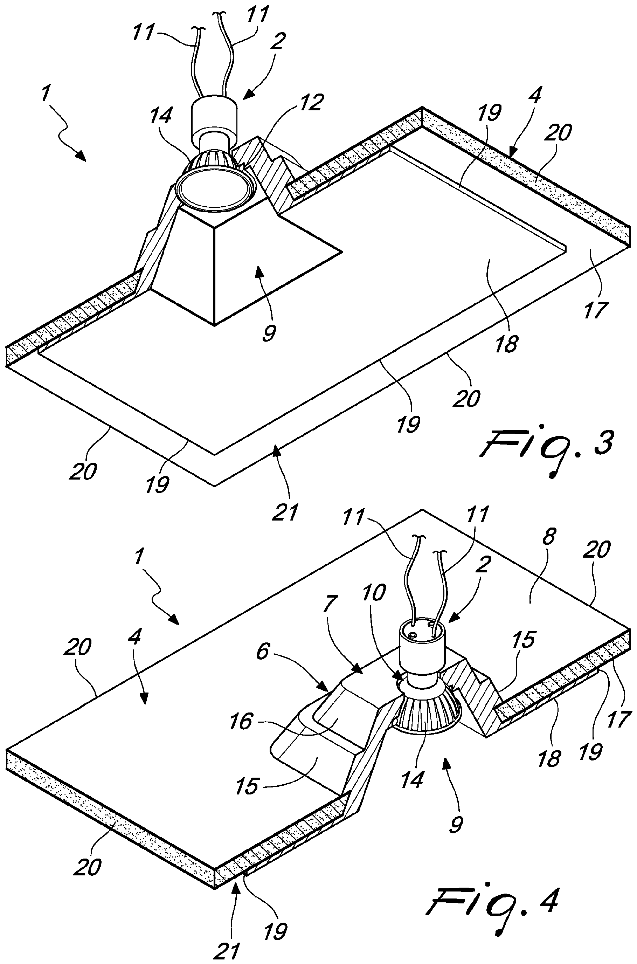

Figure 3 is a partially cross-sectional view similar to Figure 2;
Figure 4 is a partially cross-sectional view similar to Figure 1;

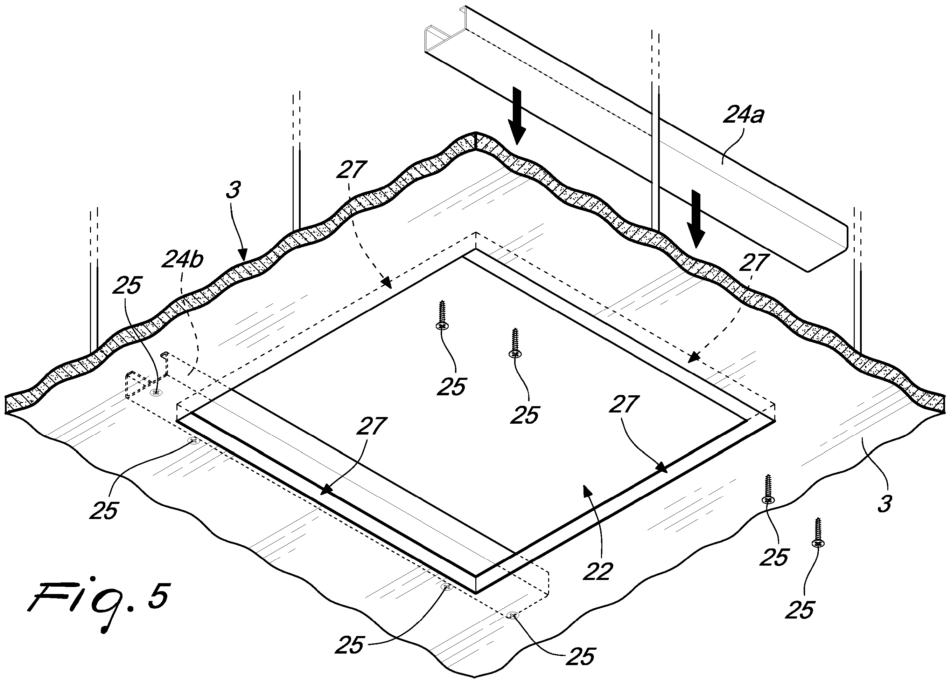

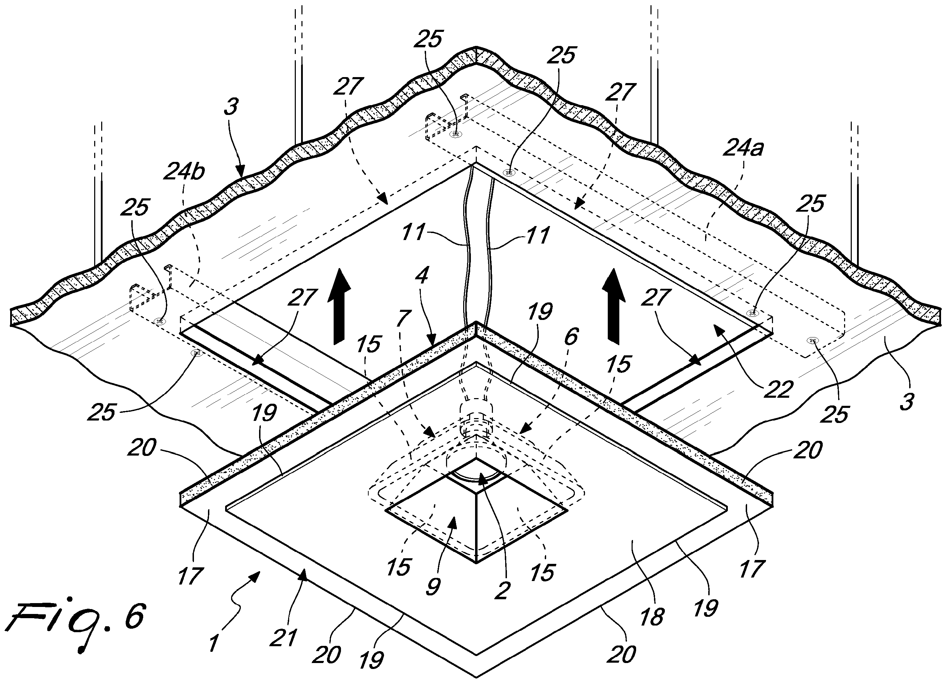

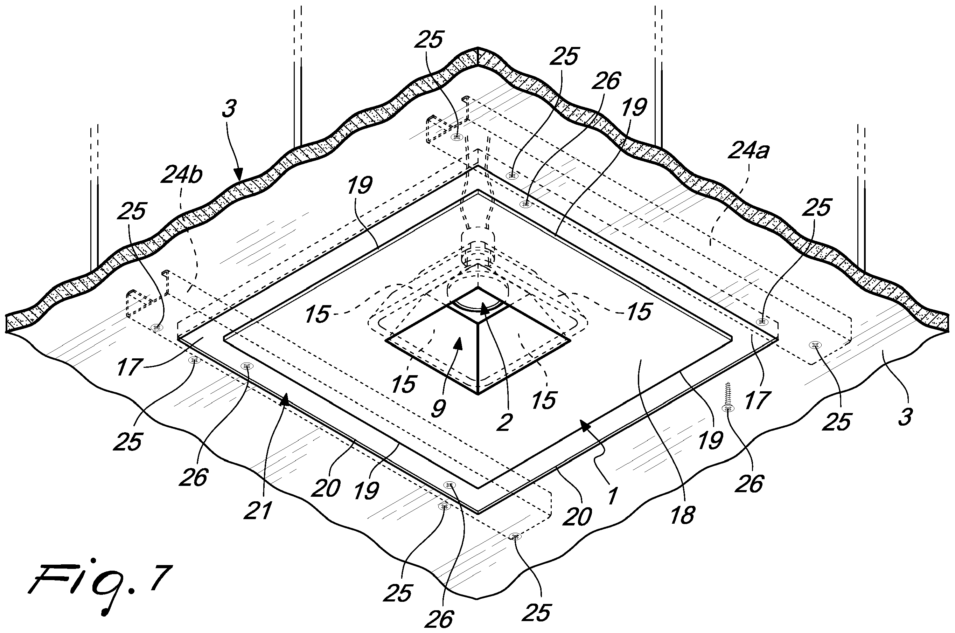

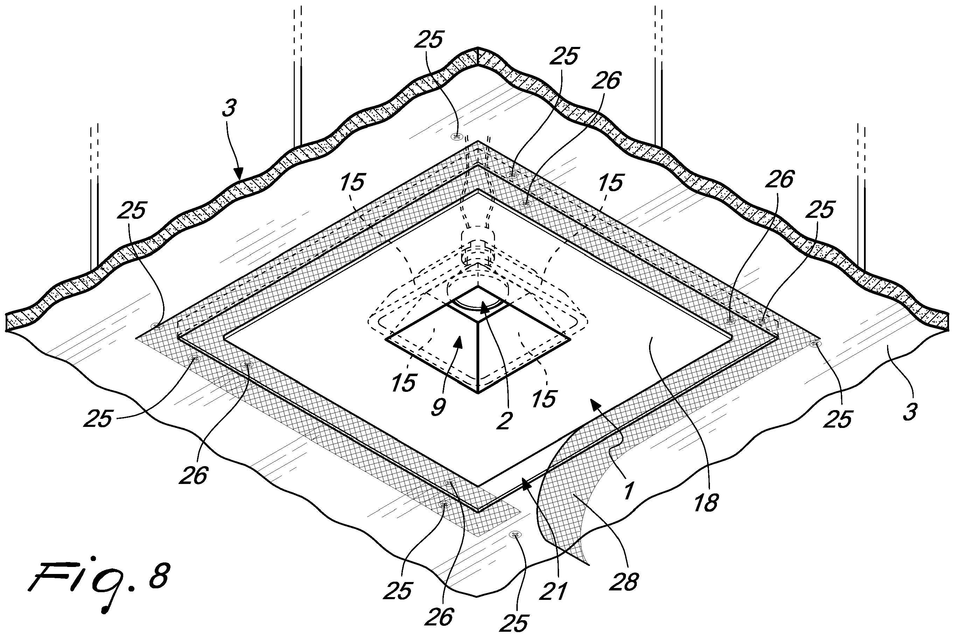

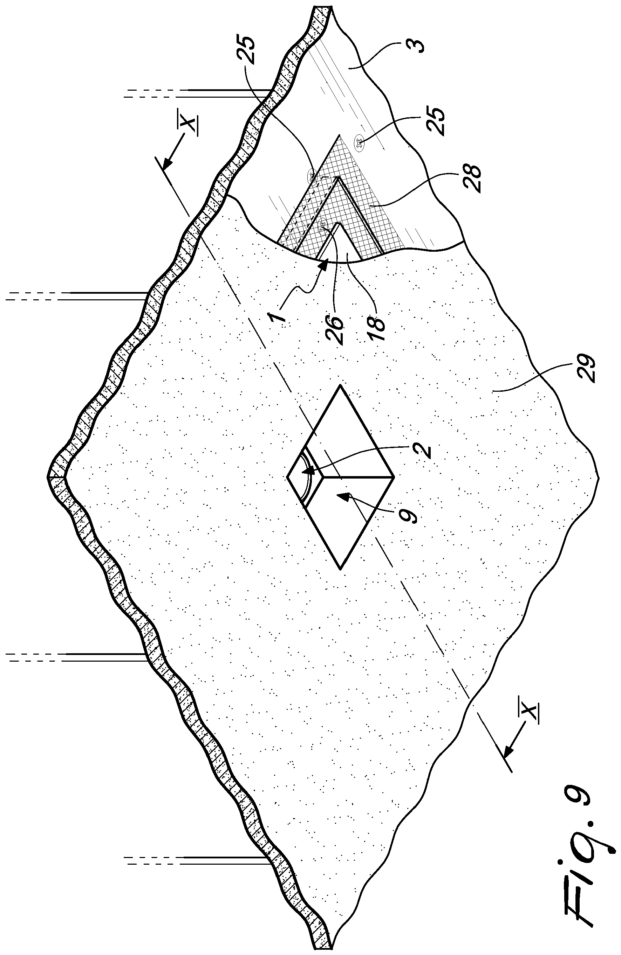

Figures 5, 6, 7, 8 and 9 show the application of the support on the wall or on the ceiling;

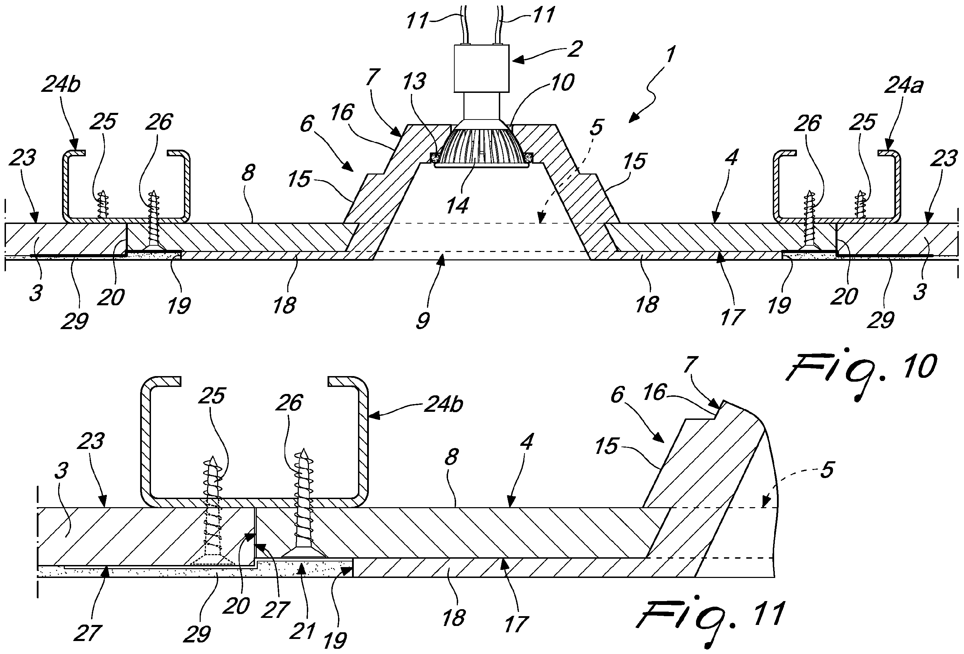

Figure 10 is a cross-sectional view taken along the line X-X in Figure 9;
Figure 11 shows a detail of the previous figure.

In the exemplary embodiments that follow, individual characteristics, given in relation to specific examples, may actually be interchanged with other, different characteristics that exist in other exemplary embodiments.

With reference to the figures, the reference numeral 1 generally designates a support for a lighting device 2, such as a spotlight, to be recessed in walls or ceilings 3 made of plasterboard.

The support 1 comprises a plasterboard panel 4 provided with at least one first opening 5, advantageously central, to which an insert 6 made of plaster is coupled by clamping, using an adapted mold.

The insert 6 is caused to form a single body with the panel 4, for example by pouring plaster into a special mold which is first associated with the panel 4, so as to obtain a single element.

The insert 6 has a shape structure with a central body 7, for example cylindrical or truncated-pyramidal or other desired shapes, which protrudes, once associated with the panel 4, in the direction of a first internal surface 8 of the panel 4 thus defined once the panel 4 has been associated with the wall or ceiling 3.

The central body 7 is internally hollow so as to define at least one seat 9 within which at least one lighting device 2 is to be positioned, the central body 7 being provided with a hole 10, on the side opposite to the opening 5, in order to allow the exit of an end of the lighting device 2 or of the corresponding power supply cables 11.

At the hole 10 there can be an annular seat 12, directed toward the opening 5, for an O-ring 13 which is adapted to keep in position and hermetically sealed the dome 14 of a lighting device 2 such as for example a spotlight.

The central body 7 surrounds and clamps the panel 4, at the opening 5 an annular ridge or a protrusion 15 being provided which protrudes beyond the lateral surface 16 of the central body 7 and abuts against the underlying first internal surface 8 of the panel 4.

A tab 18 that affects a chosen part of the panel 4, but not its entirety, instead protrudes perimetrically from the central body 7 at the first external surface 17, which is opposite from the first internal surface 8 of the panel 4.

The tab 18 therefore has a first perimetric edge 19 which is preferably parallel to the second perimetric edge 20 of the panel 4 so as to define a free and flat region 21.

The plasterboard panel 4 therefore has a greater perimetric space occupation than the plaster insert 6.

The panel 4 further has a thickness which is less than that of the wall or ceiling 3, while the thickness of the panel 4 added to that of the tab 18 is greater than that of the wall or ceiling 3.

In the wall or ceiling 3 there is a second opening 22 which is shaped complementarily to the panel 4.

Metallic battens 24a, 24b are arranged perimetrically to at least two sides of the second opening 22 at the second internal surface 23 of the wall or ceiling 3, and are fixed to the wall or ceiling 3 using first screws 25.

The battens 24a, 24b have a width that is such as to protrude with one side thereof at the second opening 22.

The panel 4 therefore can be associated with the wall or ceiling 3 by positioning it at the second opening 22 and is locked using second screws 26.

In this way the first internal surface 8 of the panel 4 comes to be arranged flush with the second internal surface 23 of the wall or ceiling 3, while a step is defined between the second perimetric edge 20 of the first external surface 17 of the panel 4 and the third perimetric edge 27 of the second opening 22 of the wall or ceiling 3.

Given the different overall height of the panel 4 and of the tab 18 of the insert 6, at the free and flat region 21 it is possible to position a mesh 28 which also affects part of the adjacent wall or ceiling 3.

A layer 29 of finishing material that makes the various elements indistinguishable from each other can be applied on the mesh 28, tab 18, free and flat region 21.

A subsequent intervention on the lighting device to be recessed is carried out by acting on the insert 6, which is made of plaster and therefore withstands manipulations to insert and extract the lighting device much better than plasterboard, which is subject to deformations and/or breakage.

Furthermore such manipulations do not lead to the formation of cracks proximate to or at the seat 9 within which the lighting device 2 is positioned, given that the tab 18 protrudes so as to also affect almost all of the panel 4 and the insert 6 is locked by clamping to the panel 4.

Thus it has been found that the support for lighting devices according to the invention fully achieves the intended aim and objects, since a support is obtained that makes it possible to install a lighting device to be recessed in walls or ceilings made of plasterboard while at the same time making it possible to prevent the formation of cracks at the opening that can be made in the wall or in the ceiling.

Furthermore the structure of the support for lighting devices makes it possible to install a lighting device to be recessed in walls or ceilings made of plasterboard while obtaining an optimal finish that is stable over time and free from maintenance.

In the event maintenance still needs to be carried out on the lighting device, the latter is easily removable while at the same time preserving the finish with respect to the wall or ceiling, since it is accommodated in the plaster insert 6.

Finally the support for lighting devices is structurally simple, is low-cost and can be provided using the usual known systems.

Naturally the materials used as well as the dimensions of the individual components of the device according to the invention may vary according to specific requirements.

The characteristics indicated above as advantageous, convenient or the like, may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A support (1) for lighting devices (2) to be recessed in walls or ceilings (3) made of plasterboard, that it is constituted by a plasterboard panel (4) provided with at least one first central opening (5) to which is coupled, by clamping, a plaster insert (6) which is provided with a seat (9) for said lighting device (2), said support (1) being associable perimetrically to a complementarily-shaped second opening (22) provided in said wall or ceiling (3), said plasterboard panel (4) having a greater perimetric space occupation than said plaster insert (6) and a thickness that is less than that of said wall or ceiling (3) with which it can be associated by way of battens (24a, 24b) which can be coupled perimetrically to said second opening (22); wherein said insert (6) is provided so as to be monolithic with said panel (4), said insert (6) having a shape structure provided with a central body (7), of chosen shapes, which protrudes, once associated with said panel (4), in the direction of a first internal surface (8) of said panel (4) thus defined once said panel (4) has been associated with said wall or ceiling (3), said central body (7) being internally hollow so as to define at least one seat (9) within which at least one lighting device (2) is to be positioned, said central body (7) being provided with a hole (10), on the side opposite to said opening (5), in order to allow the exit of an end of said lighting device (2) or of the corresponding power supply cables (11), an annular seat (12) being formed at said hole (10), directed toward said opening (5), for an O-ring (13) which is adapted to keep the dome (14) of a lighting device (2) such as a spotlight in position and hermetically sealed;
**characterized in that** said central body (7) surrounds and clamps said panel (4), at said opening (5) there being an annular ridge or protrusion (15) which protrudes beyond the lateral surface (16) of said central body (7) and abuts against said underlying first internal surface (8) of said panel (4).

2. The support (1) according to claim 1, **characterized in that** a tab (18) that affects only a chosen part of said panel (4), protrudes perimetrically from said central body (7) at the first external surface (17), which is opposite said first internal surface (8) of said panel (4).

3. The support (1) according to claim 2,
**characterized in that** said tab (18) has a first perimetric edge (19) which is substantially parallel to the second perimetric edge (20) of said panel (4) so as to define a free and flat region (21), said plasterboard panel (4) having a perimetric space occupation that is greater than that of said plaster insert (6).

4. The support (1) according to claim 2 or 3,
**characterized in that** said panel (4) has a thickness smaller than that of said wall or ceiling (3), while the thickness of said panel (4) added to that of said tab (18) is greater than that of said wall or ceiling (3).

5. The support (1) according to one or more of the preceding claims, **characterized in that** on said wall or ceiling (3) there is a second opening (22) which is shaped complementarily to said panel (4), metallic battens (24a, 24b) being arranged perimetrically to at least two sides of said second opening (22) at the second internal surface (23) of said wall or ceiling (3), and being fixed to said wall or ceiling (3) using first screws (25), said battens (24a, 24b) having a width that is such as to protrude with one side thereof at said second opening (22).

6. The support (1) according to claim 5,
**characterized in that** said panel (4) can be associated with said wall or ceiling (3) by positioning it at said second opening (22) and can be locked using second screws (26) so as to arrange said first internal surface (8) of said panel (4) flush with said second internal surface (23) of said wall or ceiling (3), while a step is defined between said second perimetric edge (20) of said first external surface (17) of said panel (4) and the third perimetric edge (27) of said second opening (22) of said wall or ceiling (3).

7. The support (1) according to claim 2 at least,
**characterized in that** the different overall height of said panel (4) and of said tab (18) of said insert (6) makes it possible to position, at least at said free and flat region (21), a mesh (28) which also affects part of said, adjacent, wall or ceiling (3).

8. The support (1) according to claim 7,
**characterized in that** a layer (29) of finishing material can be positioned on said mesh (28), said tab (18), and said free and flat region (21).

## Patentansprüche

1. Eine Tragkonstruktion (1) für Beleuchtungseinrichtungen (2) zum Einbau in Wände oder Decken (3) aus Gips, die aus einer mit mindestens einer ersten zentralen Öffnung (5) versehenen Gipsplatte (4) besteht, mit der durch Klemmung ein Gipseinsatz (6) verbunden ist, welcher mit einem Sitz (9) für die Beleuchtungseinrichtung (2) ausgestattet ist; wobei die Tragkonstruktion (1) am Umfang mit einer komplementär geformten zweiten Öffnung (22) gekoppelt werden kann, die in der Wand oder Decke (3) angebracht ist; wobei die Gipsplatte (4) einen höheren perimetrischen Platzbedarf hat als der Gipseinsatz (6) und eine Dicke, die geringer ist als diejenige der Wand oder Decke (3), mit welcher sie über Leisten (24a, 24b) verbunden werden kann, die am Umfang mit der zweiten Öffnung (22) gekoppelt werden können; wobei der Einsatz (6) monolithisch mit der Platte (4) hergestellt ist, wobei der Einsatz (6) eine Struktur hat, die mit einem zentralen Körper (7) mit ausgewählten Formen versehen ist, welcher, sobald er mit der Platte (4) verbunden wurde, in Richtung einer ersten inneren Oberfläche (8) der Platte (4) vorsteht, so definiert, sobald die Platte (4) mit der Wand oder Decke (3) verbunden wurde; wobei der zentrale Körper (7) innen hohl ist, um mindestens einen Sitz (9) zu bestimmen, in welchen mindestens eine Beleuchtungseinrichtung (2) positioniert werden soll; wobei der zentrale Körper (7) auf der Seite, die der Öffnung (5) gegenüberliegt, mit einem Loch (10) versehen ist, um den Austritt eines Endes der Beleuchtungseinrichtung (2) oder der dazugehörigen Stromversorgungskabel (11) zu gestatten; wobei ein Ringsitz (12) an dem Loch (10) geformt ist, der Öffnung (5) zugewandt, für einen O-Ring (13), welcher ausgebildet ist, um die Kuppel (14) einer Beleuchtungseinrichtung (2), wie zum Beispiel eines Spotlights, in Position und hermetisch abgedichtet zu halten;
**dadurch gekennzeichnet, dass** der zentrale Körper (7) die Platte (4) umgibt und festklemmt; wobei sich an der Öffnung (5) ein ringförmiger Grat oder Vorsprung (15) befindet, der über die Seitenfläche (16) des zentralen Körpers (7) hinausragt und an der darunter liegenden ersten inneren Oberfläche (8) der Platte (4) anliegt.

2. Die Tragkonstruktion (1) gemäß Anspruch 1, **dadurch gekennzeichnet, dass** ein Vorsprung (18), der nur einen ausgewählten Teil der Platte (4) betrifft, in Umfangsrichtung von dem zentralen Körper (7), an der ersten äußeren Oberfläche (17), vorsteht, die der ersten inneren Oberfläche (8) der Platte (4) gegenüberliegt.

3. Die Tragkonstruktion (1) gemäß Anspruch 2, **dadurch gekennzeichnet, dass** der Vorsprung (18) eine erste Umfangskante (19) hat, die im Wesentlichen parallel zur zweiten Umfangskante (20) der Platte (4) ist, um einen freien und flachen Bereich (21) zu bestimmen, wobei die Gipsplatte (4) einen perimetrischen Platzbedarf hat, der größer ist als derjenige des Gipseinsatzes (6) .

4. Die Tragkonstruktion (1) gemäß Anspruch 2 oder 3, **dadurch gekennzeichnet, dass** die Platte (4) eine geringere Dicke hat als die Wand oder Decke (3), während die Dicke der Platte (4) plus diejenige des Vorsprungs (18) größer ist als diejenige der Wand oder Decke (3).

5. Die Tragkonstruktion (1) gemäß einem oder mehreren der obigen Ansprüche, **dadurch gekennzeichnet, dass** sich an der Wand oder Decke (3) eine zweite Öffnung (22) befindet, die komplementär zu der Platte (4) geformt ist, wobei Metallleisten (24a, 24b) in Umfangsrichtung an mindestens zwei Seiten der zweiten Öffnung (22) an der zweiten inneren Oberfläche (23) der Wand oder Decke (3) angeordnet und an der Wand oder Decke (3) mit Hilfe erster Schrauben (25) befestigt sind, wobei die Leisten (24a, 24b) eine Breite haben, um mit einer Seite davon an der zweiten Öffnung (22) vorzustehen.

6. Die Tragkonstruktion (1) gemäß Anspruch 5,
**dadurch gekennzeichnet, dass** die Platte (4) durch Positionierung derselben an der zweiten Öffnung (22) mit der Wand oder Decke (3) verbunden werden und mit Hilfe zweiter Schrauben (26) blockiert werden kann, um die erste innere Oberfläche (8) der Platte (4) bündig mit der zweiten inneren Oberfläche (23) der Wand oder Decke (3) anzuordnen, während eine Stufe zwischen der zweiten Umfangskante (20) der ersten äußeren Oberfläche (17) der Platte (4) und der dritten Umfangskante (27) der zweiten Öffnung (22) der Wand oder Decke (3) bestimmt ist.

7. Die Tragkonstruktion (1) mindestens gemäß Anspruch 2, **dadurch gekennzeichnet, dass** die unterschiedliche Gesamthöhe der Platte (4) und des Vorsprungs (18) des Einsatzes (6) es ermöglicht, mindestens an dem freien und flachen Bereich (21) ein Maschengitter (28) zu positionieren, das auch einen Teil der benachbarten Wand oder Decke (3) betrifft.

8. Die Tragkonstruktion (1) gemäß Anspruch 7, **dadurch gekennzeichnet, dass** eine Schicht (29) Endbearbeitungsmaterial auf das Maschengitter (28), den Vorsprung (18) und den freien und flachen Bereich (21) positioniert werden kann.

## Revendications

1. Support (1) pour des dispositifs d'éclairage (2) destinés à être renfoncés dans des murs ou des plafonds (3) fait de plaque de plâtre, qui est constitué par un panneau de plaque de plâtre (4) pourvu d'au moins une première ouverture centrale (5) à laquelle est couplée, par serrage, un insert de plâtre (6) qui est pourvu d'un siège (9) pour ledit dispositif d'éclairage (2), ledit support (1) pouvant être associé périmétriquement à une seconde ouverture (22) de forme complémentaire pratiquée dans ledit mur ou plafond (3), ledit panneau de plaque de plâtre (4) ayant une occupation spatiale périmétrique plus grande que ledit insert de plâtre (6) et une épaisseur qui est inférieure à celle dudit mur ou plafond (3) avec lequel il peut être associé au moyen de tasseaux (24a, 24b) qui peuvent être couplés périmétriquement à ladite seconde ouverture (22) ; dans lequel ledit insert (6) est fourni de façon à être monolithique avec ledit panneau (4), ledit insert (6) ayant une structure de forme pourvue d'un corps central (7), de formes choisies, qui fait saillie, une fois associé avec ledit panneau (4), dans la direction d'une première surface intérieure (8) dudit panneau (4) ainsi définie une fois que ledit panneau (4) a été associé avec ledit mur ou plafond (3), ledit corps central (7) étant intérieurement creux de façon à définir au moins un siège (9) dans lequel au moins un dispositif d'éclairage (2) est destiné à être positionné, ledit corps central (7) étant pourvu d'un trou (10), sur le côté opposé à ladite ouverture (5), afin de permettre la sortie d'une extrémité dudit dispositif d'éclairage (2) ou des câbles d'alimentation électriques (11) correspondants, un siège annulaire (12) étant formé au niveau dudit trou (10), dirigé vers ladite ouverture (5), pour un joint torique (13) qui est adapté pour garder le dôme (14) d'un dispositif d'éclairage (2) comme un spot lumineux en position et scellé hermétiquement ;
**caractérisé en ce que** ledit corps central (7) entoure et serre ledit panneau (4), une nervure ou une saillie annulaire (15) se trouvant au niveau de ladite ouverture (5) qui fait saillie au-delà de la surface latérale (16) dudit corps central (7) et vient en butée contre ladite première surface intérieure (8) sous-jacente dudit panneau (4).

2. Support (1) selon la revendication 1, **caractérisé en ce qu'**une languette (18) qui affecte seulement une partie choisie dudit panneau (4), fait saillie périmétriquement dudit corps central (7) au niveau de la première surface extérieure (17), qui est opposée à ladite première surface intérieure (8) dudit panneau (4).

3. Support (1) selon la revendication 2, **caractérisé en ce que** ladite languette (18) a un premier bord périmétrique (19) qui est sensiblement parallèle au second bord périmétrique (20) dudit panneau (4) de façon à définir une région libre et plate (21), ledit panneau de plaque de plâtre (4) ayant une occupation spatiale périmétrique qui est supérieure à celle dudit insert de plâtre (6).

4. Support (1) selon la revendication 2 ou 3, **caractérisé en ce que** ledit panneau (4) a une épaisseur inférieure à celle dudit mur ou plafond (3), alors que l'épaisseur dudit panneau (4) ajoutée à celle de ladite languette (18) est supérieure à celle dudit mur ou plafond (3).

5. Support (1) selon une ou plusieurs des revendications précédentes, **caractérisé en ce que** sur ledit mur ou plafond (3) se trouve une seconde ouverture (22) qui est formée complémentairement audit panneau (4), des tasseaux (24a, 24b) métalliques étant agencés périmétriquement sur au moins deux côtés de ladite seconde ouverture (22) au niveau de la seconde surface intérieure (23) dudit mur ou plafond (3), et étant fixés sur ledit mur ou plafond (3) en utilisant des premières vis (25), lesdits tasseaux (24a, 24b) ayant une largeur telle qu'ils font saillie avec un de leurs côtés au niveau de ladite seconde ouverture (22).

6. Support (1) selon la revendication 5, **caractérisé en ce que** ledit panneau (4) peut être associé avec ledit mur ou plafond (3) en le positionnant au niveau de ladite seconde ouverture (22) et peut être bloqué en utilisant des secondes vis (26) de façon à agencer ladite première surface intérieure (8) dudit panneau (4) à niveau avec ladite seconde surface intérieure (23) dudit mur ou plafond (3), quand est degré est défini entre ledit second bord périmétrique (20) de ladite première surface extérieure (17) dudit panneau (4) et le troisième bord périmétrique (27) de ladite seconde ouverture (22) dudit mur ou plafond (3).

7. Support (1) selon la revendication 2 au moins, **caractérisé en ce que** la hauteur totale différente dudit panneau (4) et de ladite languette (18) dudit insert (6) rend possible de positionner, au moins au niveau de ladite région libre et plate (21), une grille (28) qui affecte aussi une partie dudit mur ou plafond (3) adjacente.

8. Support (1) selon la revendication 7, **caractérisé en ce qu'**une couche (29) de matériau de finition peut être positionnée sur ladite grille (28), ladite languette (18), et ladite région libre et plate (21).
